Europäisches Patentamt

European Patent Office

Office européen des brevets

(11) Veröffentlichungsnummer: **0 207 318**

**A2**

## (12) EUROPÄISCHE PATENTANMELDUNG

(21) Anmeldenummer: 86107586.9

(22) Anmeldetag: 04.06.86

(51) Int. Cl.⁴: **B44B 5/02** ,
//B29C59/04,B31F1/07,C14B1/5-6

(30) Priorität: 29.06.85 DE 8518933 U

(43) Veröffentlichungstag der Anmeldung:
07.01.87 Patentblatt 87/02

(84) Benannte Vertragsstaaten:
AT BE CH DE FR GB IT LI LU NL SE

(71) Anmelder: **Dornbusch, Paul Dr.**
**Tiergartenstrasse 77a**
**D-4150 Krefeld(DE)**

(72) Erfinder: **Dornbusch, Paul Dr.**
**Tiergartenstrasse 77a**
**D-4150 Krefeld(DE)**

(74) Vertreter: **Stark, Walter, Dr.-Ing.**
**Moerser Strasse 140**
**D-4150 Krefeld(DE)**

(54) **Prägewalze.**

(57) Die Erfindung betrifft eine Prägewalze mit einem beheizbaren Walzenkern und einem darauf abgestüzten, auf seiner Umfangsfläche gravierten Walzenmantel. Um bei einem Musterwechsel die Wiederverwendung von wenigstens Teilen der Prägewalzen zu ermöglichen und dadurch Herstellungskosten zu senken, soll der Walzenkern wenigstens im Bereich seiner Abstützung für den Walzenmantel aus einem Material mit einem größeren Wärmeausdehnungskoeffizienten bestehen und soll der Walzenmantel aus einem Material mit einem kleineren Wärmeausdehnungskoeffizienten bestehen.

## Prägewalze

Die Erfindung betrifft eine Prägewalze mit einem beheizbaren Walzenkern und einem darauf abgestützten, auf seiner Umfangsfläche gravierten Walzenmantel.

Derartige Prägewalzen werden zum Prägen von Leder, Geweben, Papier oder vergleichbarer Materialien verwendet. Während des Prägens sind die Prägewalzen beheizt. Herkömmliche Prägewalzen sind einstückig. Die fertige Walze wird graviert und dann zunächst zum Prägen von Musterbahnen eingesetzt. Verlangt der Kunde eine Änderung des Prägemusters, dann muß die Gravur nachgearbeitet werden. In vielen Fällen kann aber die Gravur nicht mehr den Wünschen des Kunden entsprechend geändert werden. Dann muß eine neue Präge-walze angefertigt werden. Das ist aufwendig.

Aufgabe der Erfindung ist es, bei einem Musterwechsel die Wiederverwendung von wenigstens Teilen der Prägewalze zu ermöglichen und dadurch die Herstellungskosten zu senken.

Diese Aufgabe wird dadurch gelöst, daß der Walzenkern wenigstens im Bereich seiner Abstützung für den Walzen mantel aus einem Material mit einem größeren Wärmeausdehnungskoeffizienten besteht und daß der Walzenmantel aus einem Material mit einem kleineren Wärmeausdehnungskoeffizienten besteht.

Eine solche Prägewalze ist wenigstens zweiteilig ausgebildet. Der Walzenmantel ist unabhängig vom Walzenkern. Er kann dementsprechend auch unabhängig vom Walzenkern bearbeitet und gehandhabt werden. Stellt sich heraus, daß die Gravur auf der Umfangsfläche des Walzenmantels nicht den Kundenwünschen entspricht, dann kann ein neuer Walzenmantel hergestellt werden. Zum Prägen wird der Walzenmantel auf den Walzenkern aufgeschoben. Im Zuge der Beheizung dehnt sich der Walzenkern, der aus einem Material mit einem größeren Wärmeausdehnungskoeffizienten besteht, stärker aus als der Walzenmantel, der aus einem Material mit einen kleineren Wärmeausdehnungskoeffizienten besteht. Dadurch wird der Walzenmantel praktisch auf den Walzenkern aufgespannt. Nach Abkühlung kann der Walzenmantel wieder vom Walzenkern abgezogen werden.

Zweckmäßig besteht die Abstützung des Walzenkerns aus einem Zylinder dessen Außendurchmesser in kaltem Zustand im wesentlichen dem Innendurchmesser des Walzenmantels entspricht. Das garantiert gleichmäßige Ausdehnungsverhältnisse in radialer Richtung und damit eine gleichmäßige Verspannung des Walzenmantels auf dem Walzenkern.

Im übrigen sollte der Zylinder bzw. der Walzenkern vorzugsweise aus einer Aluminiumlegierung bestehen. Der Walzenmantel kann demgegenüber aus Baustahl bestehen. Andere Materialkombinationen sind jedoch möglich, solange gewährleistet ist, daß aufgrund der unterschiedlichen Wärmeausdehnungskoeffizienten von Walzenkern einerseits und Walzenmantel andererseits eine Verspannung des Walzenmantels auf den Walzenkern gewährleistet ist, wenn die Prägewalze beheizt wird.

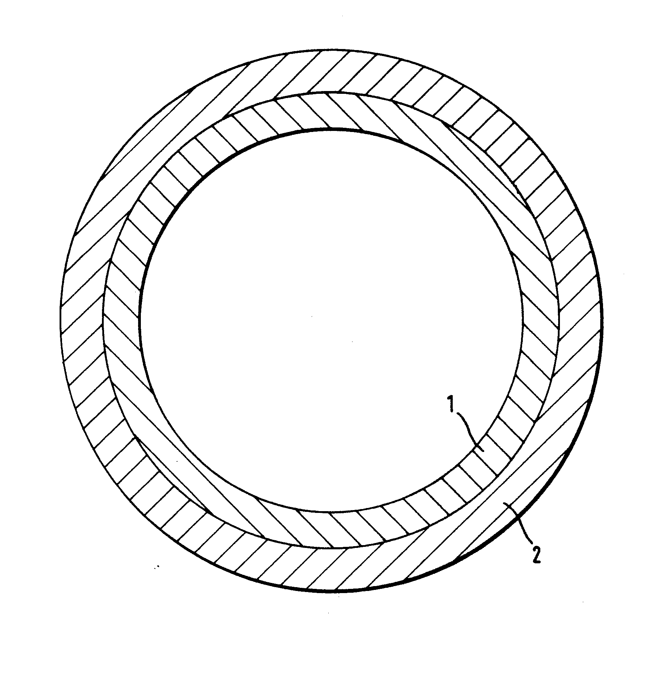

Im folgenden wird ein in der Zeichnung dargestelltes Ausführungsbeispiel der Erfindung erläutert; die einzige Figur zeigt schematisch einen Radialschnitt durch eine Prägewalze.

Die dargestellte Prägewalze besteht in ihren grundsätzlichen Aufbau aus einem Walzenkern 1 einem Walzenmantel 2. Vom Walzenkern 1 ist lediglich ein Zylinder dargestellt, der jedoch üblicherweise über Radial flansche oder dergleichen mit einer ebenfalls nicht dargestellten Nabe verbunden ist.

Der Walzenkern 1, auf jeden Fall aber sein Zylinder besteht aus einem Material mit einem verhältnismäßig großen Wärmeausdehnungskoeffizienten, bei der dargestellten Ausführung aus einer Aluminiumlegierung. Demgegenüber besteht der Walzenmantel 2 aus einem Baustahl, also aus einem Material mit einem entsprechend kleinen Wärmeausdehnungskoeffizienten.

Der Außendurchmesser des Walzenkerns 1 entspricht im wesentlichen dem Innendurchmesser des Walzenmantels 2. Die Prägewalze ist mit nicht dargestellten Heizeinrichtungen beheizbar. Im Zuge der Beheizung dehnt sich der Walzenkern 1 stärker aus als der Walzenmantel 2, sodaß der Walzenmantel 2 auf den Walzenkern 1 aufgespannt wird. Bei Abkühlung kann der Walzenmantel 2 wieder vom Walzenkern 1 abgezogen werden.

Dadurch ist es möglich, zumindest den Walzenkern 1 weiterzuverwenden, wenn das Muster der Gravur auf den Walzenmantel 2 nicht den Kundenwünschen entspricht und eine Änderung verlangt wird, die nicht durch Nacharbeit der Gravur sondern nur durch Neuanfertigung eines Walzenmantels 2 erreicht werden kann.

## Ansprüche

1. Prägewalze mit einem beheizbaren Walzenkern und einem darauf abgestützten, auf seiner Umfangsfläche, gravierten Walzenmantel, dadurch gekennzeichnet, daß der Walzenkern (1) wenigstens im Bereich seiner Abstützung mit dem Walzenmanten aus einem Material mit einem größeren Wärmeausdehnungskoeffizienten besteht und daß der Walzenmantel (2) aus einem Material mit einem kleineren Wärmeausdehnungskoeffizienten besteht.

2. Prägewalze nach Anspruch 1 dadurch gekennzeichnet, daß die Abstützung des Walzenkerns aus einem Zylinder (1) besteht, dessen Außendurchmesser im kalten Zustand im wesentlichen dem Innendurchmesser des Walzenmantels - (2) entspricht.

3. Prägewalze nach Anspruch 1 oder 2 dadurch gekennzeichnet, daß der Zylinder (1) aus einer Aluminiumlegierung besteht.

4. Prägewalze nach einem der Ansprüche 1 bis 3, dadurch gekennzeichnet, daß der Walzenmantel (2) aus Baustahl besteht.